Europäisches Patentamt

European Patent Office

Office européen des brevets

(11) Veröffentlichungsnummer: **0 267 973 B1**

# EUROPÄISCHE PATENTSCHRIFT

(45) Veröffentlichungstag der Patentschrift: **12.02.92**

(21) Anmeldenummer: **86115652.9**

(22) Anmeldetag: **11.11.86**

(51) Int. Cl.⁵: $B23D\ 49/00$

(54) **Kraftgetriebene Säge, insbesondere elektromotorisch angetriebene Säge.**

(43) Veröffentlichungstag der Anmeldung:
**25.05.88 Patentblatt 88/21**

(45) Bekanntmachung des Hinweises auf die Patenterteilung:
**12.02.92 Patentblatt 92/07**

(84) Benannte Vertragsstaaten:
**CH DE FR GB IT LI NL SE**

(56) Entgegenhaltungen:
**CH-A- 332 917**   **DE-A- 3 329 824**
**GB-A- 2 158 770**   **US-A- 1 491 134**
**US-A- 1 789 804**   **US-A- 2 784 751**
**US-A- 2 840 125**   **US-A- 2 895 514**

(73) Patentinhaber: **Black & Decker Inc.**
**Drummond Plaza Office Park 1423 Kirkwood Highway**
**Newark Delaware 19711(US)**

(72) Erfinder: **Berghäuser, Ulrich**
**Bornpfad 25**
**W-6204 Taunusstein(DE)**
Erfinder: **Grossmann, Horst**
**Fliederweg 10**
**W-6257 Hünfelden 1(DE)**
Erfinder: **Schmid, Karl**
**Reichenbergerstrasse 36c**
**W-6270 Idstein 2(DE)**
Erfinder: **Staas, Ernst**
**Bahnhofstrasse 10**
**W-6259 Brechen 1(DE)**

(74) Vertreter: **UEXKÜLL & STOLBERG Patentan-wälte**
**Beselerstrasse 4**
**W-2000 Hamburg 52(DE)**

Rank Xerox (UK) Business Services

**Beschreibung**

Die Erfindung bezieht sich gemäß Oberbegriff von Patentanspruch 1 auf eine kraftgetriebene Säge, insbesondere elektromotorisch angetriebene Säge, mit zwei nebeneinander, parallel zueinander angeordneten, gegensinnig hin und her bewegbaren Sägeblättern.

Bei einer bekannten Säge dieser Art (GB-A 2 158 770), bei der die benachbarten, gegensinnig bewegbaren Sägeblätter mit ihren hinteren Enden mit Schneidblatthalterungen verbunden sind, sollen die Sägezähne so ausgebildet sein, daß sich im Betrieb im Bereich der Sägezähne ein Zusammendrücken ergibt und so das Aufspreizen der Sägeblätter in diesem Bereich verhindert wird. Zusätzlich werden zum Zusammenhalten der Sägeblätter Führ- und Anschlageinrichtungen benutzt, und gegebenenfalls kann auch im Bereich der den Sägezähnen abgewandten Seiten der Sägeblätter ein U-förmiger Stützkanal vorgesehen sein.

Diese bekannte Säge benötigt formstabile Sägeblätter, die in der Schnittebene durch ihre verhältnismäßig hohen Abmessungen gegen Verformungen gesichert sind, die jedoch zur Verhinderung von Biegeverformungen aus der Schnittebene eine relativ große Materialstärke haben müssen. Daher muß nicht nur eine große Menge an hochqualitativem Material eingesetzt werden, sondern es ergibt sich auch eine unerwünscht große Schnittdicke. Wird darüber hinaus ein U-förmiger Stützkanal bzw. ein U-förmiges "Schwert" vorgesehen, das am Sägegehäuse befestigt ist und die beiden Sägeblätter in ihrem oberen Randbereich übergreift, so wird die Schnittiefe der Säge begrenzt, weil die Sägeblätter infolge des seitlichen Überstandes des Schwertes nicht mehr vollständig durch ein Werkstück geführt werden können.

Es ist auch bereits eine Säge bekannt (US-A-2 840 125), bei der ein die oberen Bereiche der Sägeblätter übergreifendes Schwert in Form eines U-förmig gebogenen Blechstreifens vorgesehen ist, dessen Unterkanten im Abstand oberhalb von an den Außenseiten der Sägeblätter in deren Längsrichtung verlaufenden Längsschultern enden, wobei das Schwert nicht seitlich über die Längsschultern vorsteht und daher die Schnittiefe nicht begrenzt. Die beiden Sägeblätter werden mittels einer Halteanordnung hin- und herbewegbar am Schwert gehaltert, wobei sich Teile dieser Halteanordnung durch Schlitze in den Sägeblättern erstrecken, um deren vordere Enden frei verschiebbar zu haltern, so daß hierdurch eine Abstützung der Sägeblätter am Schwert stattfindet.

Bei dieser bekannten Säge besteht die Gefahr, daß beim Zerspanen eines Werkstücks im Bereich zwischen den beiden sich hin- und herbewegenden Sägeblättern Material stehenbleibt, das sich dann zwischen die Sägeblätter drückt, oder daß zerspantes Material zwischen die Sägeblätter gelangt. Dies führt zu einem Aufspreizen der Sägeblätter, das sich dann automatisch weiter durch weiteres, zwischen die Sägeblätter gelangendes Material verstärkt, so daß es schließlich zu einer Beschädigung der Säge kommt, zumindest aber der Betrieb unterbrochen werden muß.

Bei einer anderen bekannten Säge (DE-A-3 329 835) bestehen die Sägeblätter aus verhältnismäßig dickem Material, und alle Sägezähne sind nach außen geschränkt. Die Stützung der Sägeblätter durch das Schwert ist nicht beschrieben, erfolgt aber entweder über einen sich durch Schlitze in den Sägeblättern erstreckenden, ans Schwert befestigten Bolzen oder sowohl an den außen liegenden Längsschultern der Sägeblätter als auch an deren oberen Längskanten. Dadurch wirken im Betrieb auf die unteren Enden der Sägeblätter nach außen gerichtete Kräfte, und um ein Aufspreizen der Sägeblätter zu verhindern, müssen diese sehr stabil sein und sehr genau geführt und sicher abgestützt werden.

Es ist Aufgabe der Erfindung, eine kraftgetriebene Säge zu schaffen, mit der eine dünne Schnittfuge hergestellt werden kann, ohne daß die Gefahr besteht, daß infolge der dünnen Ausbildung der Sägeblätter ein Aufspreizen im Bereich des Eingriffs mit dem Werkstück stattfindet.

Zur Lösung dieser Aufgabe dient eine kraftgetriebene Säge, insbesonders elektromotorisch angetriebene Säge mit zwei nebeneinander, parallel zueinander angeordneten, gegensinnig hin und her bewegbaren Sägeblättern, deren benachbarte hintere Enden mit Schneidblatthalterungen verbunden sind, und mit einem im den Sägezähnen abgewandten Bereich der Sägeblätter diese in einem Aufnahmeschlitz aufnehmenden Schwert, wobei im Betrieb bei Eingriff der Sägezähne der Sägeblätter mit einem Werkstück im Bereich ihrer Sägezähne zusammendrückende Kräfte bzw. Drehmomente erzeugt werden, wobei sich die Säge dadurch auszeichnet, daß die Sägeblätter an ihren Außenseiten in Richtung der Längserstreckung verlaufende, von den Sägezähnen weg gerichtete Längsschultern aufweisen, daß der Aufnahmeschlitz des Schwertes für die Sägeblätter seitlich durch Trägerabschnitte begrenzt ist, an deren unteren Kanten sich die Sägeblätter durch Eingriff mit ihren Längsschultern abstützen, während zwischen den oberen Kanten der Sägeblätter und dem Grund des Aufnahmeschlitzes ein Freiraum vorhanden ist, und daß die Kräfte bzw. Drehmomente zumindest teilweise durch das Zusammenwirken von Längsschultern der Sägeblätter und unteren Kanten der Trägerabschnitte des Schwertes entstehen.

Bei der erfindungsgemäßen Säge werden die Sägeblätter durch Eingriff der unteren Kanten der Trägerabschnitte des Schwertes mit der an den Außenseiten der Sägebläter vorgesehenen Längsschultern abgestützt. Dadurch erfolgt eine Stabilisierung der Sägeblätter über im wesentlichen ihre gesamte axiale Länge und verhältnismäßig nahe an den Sägezähnen, wodurch es möglich wird, verhältnismäßig dünnwandige Sägeblätter zu verwenden und so eine schmale Schnittfuge zu erreichen, ohne daß die Gefahr besteht, daß sich die vom Schwert wirksam abgestützten Sägeblätter unter der Belastung verformen, wobei insbesondere durch die Abstützung an den verhältnismäßig weit außen liegenden Längsschultern ein Zusammendrücken der Sägeblätter im Bereich der Sägezähne stattfindet. Diese Zusammendrückung kann weiterhin durch die Ausbildung der Sägezähne, etwa ihre Schränkung, ihren Anschliff u. ä. unterstützt werden, so daß die bei Eingriff mit dem Werkstück auf die äußeren Bereiche des Sägeblattes wirkenden Kräfte kleiner sind als die auf die inneren Bereiche des Sägeblattes wirkenden Kräfte und/oder daß die auf die Sägezähne wirkenden Kräfte eine Komponente quer zur Längserstreckung des jeweiligen Sägeblattes haben, die auf das andere Sägeblatt gerichtet ist.

Durch diese im Betrieb ein Zusammendrücken der Sägeblätter im Bereich der Sägezähne bewirkenden Kräfte wird nicht nur ein Aufspreizen der Sägeblätter vermieden, selbst wenn diese verhältnismäßig leicht elastisch verformbar sind, sondern darüber hinaus braucht die Halterung der Sägeblätter auch nicht mit engen Toleranzen vorgenommen zu werden, da die Sägeblätter selbst dann, wenn zwischen ihnen ein verhältnismäßig großes seitliches Spiel vorhanden ist, im Betrieb gegeneinander gedrückt werden.

Um bei Verwendung dünnwandiger und daher leicht verformbarer Sägeblätter einen insgesamt ausreichend stabilen Aufbau zu erhalten, kann das Biegewiderstandsmoment des Schwertes das 7,5-fache bis 30-fache, vorzugsweise das 10-fache bis 25-fache des Biegewiderstandsmomentes eines Sägeblattes betragen.

Das Biegewiderstandsmoment ist ein Maß dafür, wie stark sich Schwert und Sägeblatt seitlich elastisch verbiegen, wenn sie bei Einspannung am inneren Ende am freien Ende mit der gleichen Seitenkraft beaufschlagt werden. Bei der erfindungsgemäßen Säge können also Sägeblätter eingesetzt werden, die bei Belastung mit einer vorgegebenen Seitenkraft 7,5 mal bis 30 mal, vorzugsweise 10 mal bis 25 mal stärker elastisch ausgelenkt werden als das Schwert.

Durch einen derartigen Aufbau wird erreicht, daß bei Verwendung sehr dünnwandiger und daher sehr stark seitlich elastisch verformbarer Sägeblätter, die beispielsweise eine maximale Dicke von 1 mm bis 2 mm haben, durch die Ausbildung des Schwertes, das die Sägeblätter im Bereich oberhalb der Längsschultern umgreift und gegen seitliche Verlagerung abstützt, sichergestellt wird, daß sich die Sägeblätter im Betrieb trotz ihrer Dünnwandigkeit und ihrer Verformbarkeit nicht seitlich verlagern, sondern infolge der Stabilität des Schwertes in der gewünschten ausgerichteten Lage gehalten werden. Darüber hinaus verhindert das Schwert auch ein Abknicken der Sägeblätter unter der im Betrieb auftretenden Belastung.

Um das vorstehend erläuterte Zusammendrücken der Sägeblätter im Bereich der Sägezähne zu erreichen, kann beispielsweise jedes der Sägeblätter mindestens drei Gruppen von Sägezähnen aufweisen, von denen die erste Gruppe außen liegende, nach außen geschränkte und über die äußere ebene Fläche des Sägeblattes vorstehende Sägezähne, die zweite Gruppe innen liegende, ungeschränkte Sägezähne, die von ihren Außenkanten bezüglich des Sägeblattes nach außen angeschliffen sind, und die dritte Gruppe Sägezähne umfaßt, deren Zahnwurzeln weiter außen liegen als die Sägezähne der zweiten Gruppe und die nicht über die Sägezähne der zweiten Gruppe vorstehend nach innen geschränkt sind.

Beim Eingriff mit dem Werkstück wirken dann zwar auf die erste Gruppe von Sägezähnen Kräfte in Richtung einer Trennung der beiden Sägeblätter, jedoch erzeugen die auf die zweite Gruppe von Sägezähne wirkenden Kräfte wegen des Anschliffes der Sägezähne und die auf die dritte Gruppe von Sägezähnen wirkenden Kräfte infolge deren Schränkung Kräfte, die ein Zusammendrücken der beiden Sägeblätter bewirken.

Vorzugsweise liegen dabei die Zahnwurzeln der Sägezähne der ersten und dritten Gruppe in einem Bereich des Sägeblattes, der sich weiter außen als die Längsebene durch das Sägeblatt am inneren Ende der Längsschulter befindet. Ferner ist es zweckmäßig, wenn die Breite der Längsschulter nicht größer als die halbe maximale Dicke des Sägeblattes ist, da dann die abstützende Kraft verhältnismäßig weit außen am Sägeblatt angreift und so die Erzeugung des gewünschten Drehmomentes unterstützt.

Wie bereits erwähnt, ist das Schwert vorzugsweise plattenförmig ausgebildet, wobei unter plattenförmig zu verstehen ist, daß die Erstreckung in einer Ebene wesentlich, also zumindest über den größten Teil der Abmessung mindestens 10 mal größer als die Abmessung senkrecht zu dieser Ebene ist.

Das plattenförmige Schwert hat im Bereich seines Befestigungsendes vorzugsweise eine größere Höhe als im Bereich seines freien Endes, wodurch die Form des Schwertes an die tatsächlich auftretenden Biegebelastungen im Betrieb angepaßt ist.

Um dem Schwert bei einfacher Herstellung eine möglichst große Festigkeit zu geben, kann es aus mindestens zwei flächig miteinander verbundenen Teilplatten bestehen.

In einer derartigen Ausgestaltung ist das Schwert aus zwei Teilplatten aufgebaut, die im den Sägeblättern zugewandten Bereich die Trägerabschnitte bildend im Abstand voneinander liegen.

In einer anderen Ausgestaltung besteht das Schwert aus drei Teilplatten, von denen die mittlere im Abstand von den unteren Kanten der Trägerabschnitte endet. Die beiden äußeren Teilplatten sind im den Sägeblättern zugewandten Bereich die Trägerabschnitte bildend nach außen versetzt.

Bei jedem dieser Aufbauten hat das Schwert im die Sägeblätter umgebenden Bereich eine größere Dicke als in einem Bereich oberhalb der Sägeblätter. Ein derartiger Aufbau ist deshalb vorteilhaft, weil dadurch verhindert wird, daß sich das Schwert verklemmt, wenn sich bei in das Werkstück eintauchenden Sägeblättern der zuvor hergestellte Schnitt geringfügig wieder schließt. Dieses Schließen des Schnittes kann bei durchgehend gleicher Dicke des Schwertes dazu führen, daß dieses im Bereich des Schnittes oberhalb der Sägeblätter eingeklemmt wird, so daß die Säge nicht mehr zu bewegen ist.

Die Teilplatten werden vorzugsweise durch Punktschweißung miteinander verbunden.

Um einen möglichst einfachen und preiswert herstellbaren Aufbau der Sägeblätter zu erreichen, kann die Längsschulter jedes Sägeblattes von einem Sägezähne tragenden Abschnitt gebildet sein, der flächig mit dem über die Längsschulter vorstehenden und Sägezähne aufweisenden Hauptabschnitt verbunden, vorzugsweise verschweißt ist.

Ein derartiges Sägeblatt läßt sich somit aus zwei sehr einfach aus Bandmaterial herzustellenden Teilen, dem Abschnitt und dem Hauptabschnitt zusammensetzen.

Um die im Betrieb anfallenden Sägespäne aus dem Bereich der Sägezähne einfach abführen zu können, kann bei einem derartigen Sägeblatt der Abschnitt sich von den Sägezähnen zur Längsschulter erstreckende, an beiden Enden offene Nuten aufweisen bzw. durch solche Nuten unterbrochen sein. Durch diese Nuten kann das zerspante Material sehr einfach aus dem Bereich der Sägezähne abgeführt werden.

Im Betrieb gelangt auch zerspantes Material in den Freiraum zwischen den Sägeblättern und dem Schwert, und um dieses Material abführen zu können, können im Schwert den Freiraum mit der Schwertaußenfläche verbindende Bohrungen vorgesehen sein, durch die dann das Material aus dem Freiraum austreten kann.

Eine Säge der interessierenden Art kann beispielsweise ein Kunststoffgehäuse aufweisen, in dem ein aus Metall bestehendes, die Schneidblatthalterungen aufnehmendes Getriebegehäuse angeordnet ist. Um in einem solchen Fall das Schwert auch unter der im Betrieb auftretenden Belastung fest in seiner Lage halten zu können und damit auch eine unerwünschte Verlagerung der Sägeblätter zu vermeiden, kann das Schwert am Getriebegehäuse befestigt sein. Hierzu kann am Getriebegehäuse ein Befestigungsansatz mit einer Anlagefläche für den Befestigungsbereich des Schwertes angeformt sein.

Dadurch führt das Schwert nicht nur sehr wirksam die Wärme von den Sägeblättern, sondern auch vom Getriebegehäuse ab.

Die Erfindung wird im folgenden anhand der Figuren näher erläutert.

| | |
|---|---|
| Figur 1 | zeigt in einer Seitenansicht ein kraftgetriebenes Werkzeug in Form einer elektrisch angetriebenen, tragbaren Säge. |
| Figur 2 | zeigt eine Draufsicht auf die Säge aus Figur 1. |
| Figur 3 | zeigt eine Ansicht der Säge aus Figur 1 von rechts, wobei die Stützgriffe entfernt sind. |
| Figur 4 | zeigt eine Ansicht der Säge aus Figur 1 von links. |
| Figur 5 | zeigt eine Explosionsdarstellung der Säge aus den Figuren 1 bis 4. |
| Figur 6 | zeigt in einer Teildarstellung, teilweise aufgebrochen und teilweise im Schnitt den den Motor das Getriebe und die Schneidblatthalterungen enthaltenden Teil der Säge gemäß Figuren 1 bis 5. |
| Figur 7 | zeigt einen Schnitt entlang der Linie VII-VII aus Figur 6. |
| Figur 8 | zeigt in einer Seitenansicht das Schwert der Säge gemäß Figuren 1 bis 7. |
| Figur 9 | zeigt in einer Teilansicht den vorderen Teil des Schwertes aus Figur 8 mit eingesetzten Sägeblättern. |
| Figur 10 | zeigt einen Teilschnitt entlang der Linie X-X aus Figur 9. |
| Figur 11 | zeigt vergrößert die Einzelheit aus dem Kreis 2 aus Figur 9. |
| Figur 12 | zeigt einen Teilschnitt entlang der Linie XII-XII aus Figur 11, wobei die Sägeblätter weggelassen sind. |
| Figur 13 | zeigt in einer Teilansicht ein anderes Schwert mit eingesetzten Sägeblättern. |
| Figur 14 | zeigt einen Teilschnitt entlang der Linie XIV-XIV aus Figur 13. |

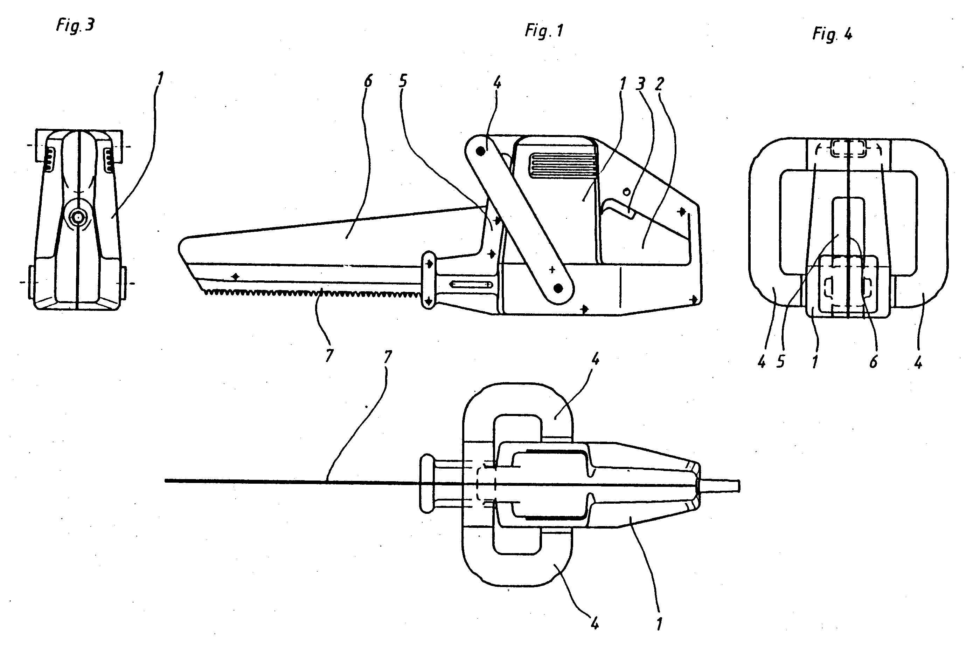

Die in den Figuren 1 bis 4 gezeigte Säge hat ein in üblicher Weise aus Halbschalen aufgebautes Gehäuse 1, in dem ein Elektromotor 10, gegebenenfalls jedoch auch ein Verbrennungsmotor, die Getriebeanordnung und die Schneidblatthalterungen 15 und 18 untergebracht sind. Am hinteren Teil des Gehäuses l ist eine Grifföffnung 2 ausgebildet, in die sich in üblicher Weise der von Hand zu betätigende Drücker 3 eines Ein-Aus-Schalters 3' erstreckt. Am vorderen Teil des Gehäuses 1 ist eine nur schematisch gezeigte Befestigungsanordnung 5 zur Anbringung eines Schwertes 6 vorgesehen, das die oberen Bereiche der sich gegensinnig hin- und herbewegenden Sägeblätter abstützend umgreift. Vom Gehäuse 1 erstrecken sich zwischen Öffnung 2 und Schwert 6 seitlich Stützgriffe 4.

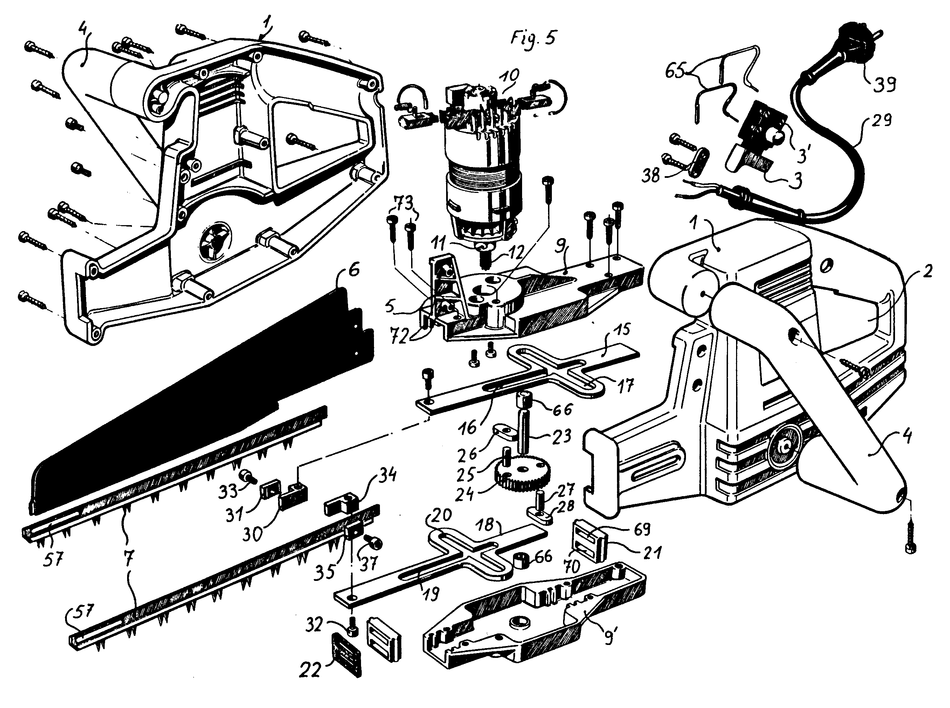

Wie Figur 5 zu entnehmen ist, wird am Griffteil des Gehäuses 1 durch eine Zugentlastungsplatte 38 ein Anschlußkabel 29 mit Stecker 39 befestigt, und zwei kurze Kabelstücke 65 mit Anschlußklemme dienen zur Herstellung einer Leitungsverbindung vom Ein-Aus-Schalter 3' zum Elektromotor 10.

Der im Gehäuse 1 gelagerte Elektromotor 10, auf dessen Ankerwelle 11 ein Lüfterrad 13 sitzt, ist in Turmbauweise aufrecht auf einem aus Metall bestehenden Teilgehäuse 9 der Getriebeanordnung montiert. Die Ankerwelle ist an ihrem äußeren Ende als Ritzel 12 ausgebildet und erstreckt sich mit ihrem äußeren Endbereich durch das Teilgehäuse 9 und ragt durch die Längsschlitze 16 bzw. 19 der oberen bzw. unteren Schneidblatthalterung 15 bzw. 18. Das freie Ende der Ankerwelle 11 ist in einem unteren aus Metall bestehenden Teilgehäuse 9' in einem Lager 14 gelagert.

Wie insbesondere Figur 5 zu entnehmen ist, haben die Schneidblatthalterungen 15, 18 Kreuzform und weisen zusätzlich zu den Längsschlitzen 16, 19 quer dazu verlaufende Führungsschlitze 17, 20 auf. Man erkennt, daß die Längsschlitze 16, 19 von den Führungsschlitzen 17, 20 durch keinen Steg getrennt sind, so daß die Ankerwelle 11 bei einer Längsverschiebung der Schneidblatthalterungen 15, 18 aus einem Bereich der Längsschlitze 16, 19 durch den Bereich der Führungsschlitze 17, 20 in den gegenüberliegenden anderen Bereich der Längsschlitze 16, 19 gelangen kann.

Parallel zur Ankerwelle 11 erstreckt sich durch das Teilgehäuse 9 im Bereich näher zur Grifföffnung 2 eine Lagerachse 23, die an beiden Enden drehbar in Lagerbuchsen 66 in den Teilgehäusen 9, 9' gelagert ist und auf der unverdrehbar ein Zahnrad 24 befestigt ist, das in kämmendem Eingriff mit dem Ritzel 12 steht.

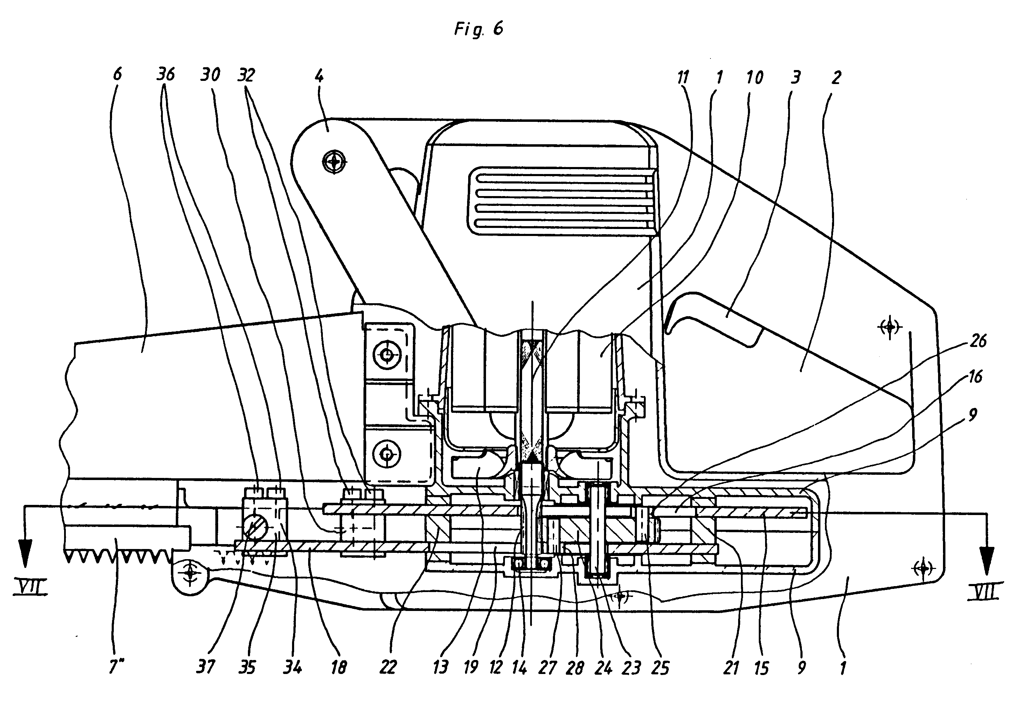

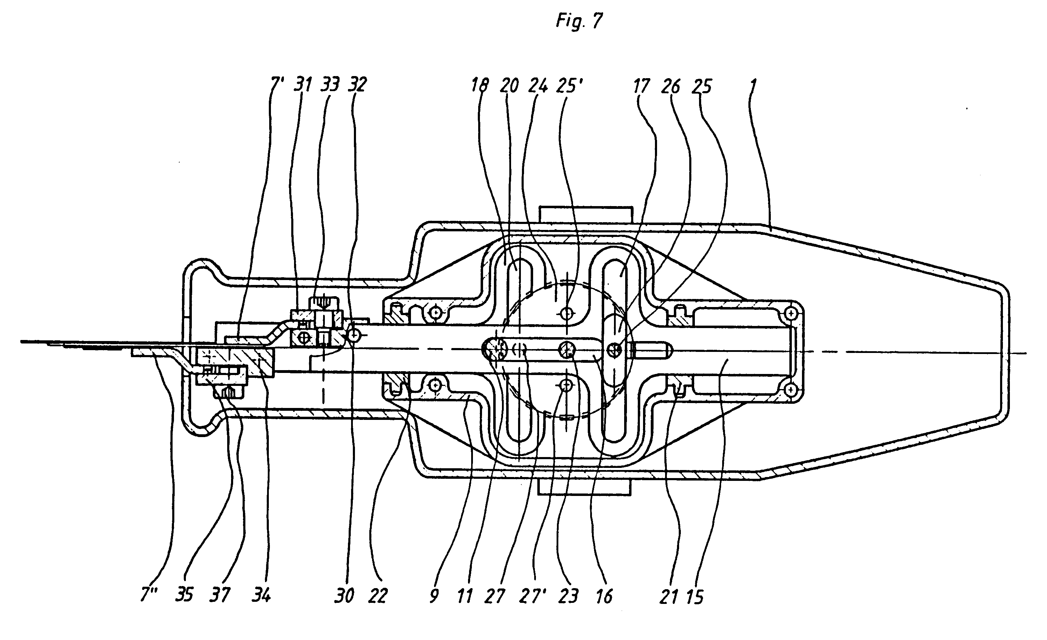

Das Zahnrad 24 befindet sich zwischen den beiden Schneidblatthalterungen 15, 18, und seine Lagerachse 23 erstreckt sich ebenso wie die Ankerwelle 11 durch die Längsschlitze 16, 19, wobei die Länge der Längsschlitze 16, 19 so gewählt ist, daß die Schneidblatthalterungen 15, 18 in der nachstehend zu beschreibenden Weise über ihren gesamten Hub in der Zeichenebene gemäß Figuren 6 und 7 in Richtung ihrer Längserstreckung hin- und herbewegbar sind. An gegenüberliegenden Seiten des Zahnrades 24 sind Exzenterstifte 25, 27 angebracht, auf deren äußeren Enden drehbar Gleitsteine 26, 28 gelagert sind. Bei normaler, für den Gebrauch üblicher und in den Figuren 5 und 6 dargestellter Lage der Säge liegt der Gleitstein 26 oberhalb des Zahnrades 24 und der Gleitstein 28 unterhalb des Zahnrades 24. Der Gleitstein 26 steht in Eingriff mit dem Führungsschlitz 17 der oberen Schneidblatthalterung 15 und der Gleitstein 28 mit dem Führungsschlitz 20 der unteren Schneidblatthalterung 18. Dadurch ist der Abstand zwischen den beiden Schneidblatthalterungen 15 und 18 lediglich etwa gleich der Dicke des Zahnrades 24.

Die Länge der Gleitsteine 26, 28 entspricht mindestens 2 mal der Breite des Längsschlitzes 16 bzw. 19 plus dem Durchmesser des zugehörigen Exzenterstiftes, um sicherzustellen, daß der Gleitstein 26, 28 in jeder Lage sicher im zugehörigen Führungsschlitz 17, 20 geführt wird und sich nicht im Übergangsbereich zum Längsschlitz 16, 19 verkantet.

Die Exzenterstifte 25 und 27 liegen auf einer Diagonalen durch die Mittelachse des Zahnrades 24 und haben den gleichen radialen Abstand von der Lagerachse 23.

Die Schneidblatthalterungen 15, 18 werden durch zwei Lagerblöcke 21, 22 abgestützt, die zwei zueinander parallel verlaufende und durch einen Steg getrennte Schlitze 69, 70 aufweisen. Die Höhe und Breite der Schlitze 69, 70 ist so gewählt, daß die länglichen, im Querschnitt im wesentlichen rechteckförmigen Schneidblatthalterungen 15, 18 mit leichtem Spiel hindurchpassen, so daß eine gute Längsführung für die Schneidblatthalterungen 15, 18 erreicht wird. Die Lagerblöcke 21, 22 sind am Vorderende bzw. am Hinterende des Teilgehäuses 9, 9' eingesetzt und durch Schwalbenschwanzführungen oder ähnliche Führungsrillen, die ein Kippen der Lagerblöcke 21, 22 verhindern, gehalten.

An den aus den Teilgehäuse 9 9' vorstehenden, in den Figuren 6 und 7 links liegenden Enden der Schneidblatthalterungen 15, 18 sind Schneidblattaufnahmen in Form von Klemmen befestigt, die aus einem mittels Schrauben 32 an den Schneidblatthalterungen 15 bzw. 18 befestigten Klemmblöcken 30 und 34 sowie gegen diese mittels jeweils einer Klemmschraube 33 bzw. 37 drückbaren Klemmstücken 31 bzw. 35 bestehen. Wie in Figur 7 angedeutet, ist zwischen dem Klemmblock 30 und dem Klemmstück 31 das abgekröpfte Ende eines Sägeblattes 7' eingeklemmt, während zwischen dem Klemmblock 34 und dem Klemmstück 35 das hintere Ende eines abgekröpften Abschnittes eines Sägeblattes 7" gehalten ist.

An diesen abgekröpften Enden sind in nicht dargestellter Weise die Sägeblattschäfte befestigt, etwa durch Schweißung, und durch die Abkröpfung wird erreicht, daß die hin- und herzubewegenden Sägeblätter unmittelbar benachbart zueinander liegen.

Wird die Ankerwelle 11 vom Motor 10 angetrieben, so dreht sie mittels ihres Ritzels 12 das Zahnrad 24, wodurch die Exzenterstifte 25 und 27 eine Umlaufbewegung um die Mittelachse der Lagerachse 23 ausführen. Infolge dieser Umlaufbewegung verlagern sich die Gleitsteine 26 und 28 entsprechend und bewegen sich in den Führungsschlitzen 17 und 20 hin und her, wobei sie, wegen der Umlaufbewegung die zugehörige Schneidblatthalterung 15, 18 auch in Richtung der Längserstreckung dieser Schneidblatthalterung vor-und zurück- oder hin- und herbewegen. Geht man in diesem Zusammenhang davon aus, daß die Bewegung aus der Position gemäß Figur 7 startet, so wird bei Drehung des Zahnrades 24 die Schneidblatthalterung 15 aus ihrer in Figur 7 äußeren rechten Stellung nach links und die Schneidblatthalterung 18 aus ihrer in Figur 7 äußeren linken Stellung nach rechts verlagert, d.h. die Schneidblatthalterungen 15 und 18 werden entgegengesetzt zueinander hin- und herbewegt, wobei der Hub der beiden Schneidblatthalterungen gleich ist, weil der Abstand der zugehörigen Exzenterstifte 25, 27 von der Lagerachse 23 des Zahnrades 24 gleich ist.

Bei dieser Hin- und Herbewegung der Gleitsteine 26 und 28 in den Führungsschlitzen 17 und 20 überlaufen die Gleitsteine auch die die Führungsschlitze kreuzenden Längsschlitze 16, 19, ohne daß es zu einer Beeinträchtigung der Bewegung der Gleitsteine käme, weil diese infolge ihrer Abmessung immer sicher in den Führungsschlitzen 17 und 20 geführt werden und nicht im Kreuzungsbereich mit den Längsschlitzen 16, 19 verkanten können.

Wie in Figur 7 angedeutet, können im Zahnrad 24 zusätzliche Paare von Bohrungen 25', 27' vorhanden sein. Diese Bohrungen 25', 27' liegen näher an der Lagerachse 23 als die Exzenterstifte 25, 27, haben jedoch von der Lagerachse 23 beide den gleichen Abstand. Werden daher die Exzenterstifte 25, 27 in die Bohrungen 25' und 27' eingesetzt, so ergibt sich bei ansonsten praktisch gleichem Aufbau der Säge ein kleinerer Hub der Schneidblatthalterungen 15 und 18.

Das plattenförmige Schwert 6, dessen Aufbau später beschrieben werden wird, ist mittels der an seinem Befestigungsende vorgesehenen Bohrungen 87 an einem Vorsprung 5 befestigt, der am Teilgehäuse 9 angeformt ist und eine hintere Verstärkungsrippe 71 aufweist. Durch die senkrechte Wand des Vorsprungs 5 erstrecken sich angeformte oder aufgesetzte Schraubenbuchsen 72 für die Aufnahme von Klemmschrauben 73, die sich durch die Befestigungsbohrungen 87 des Schwertes 6 erstrecken.

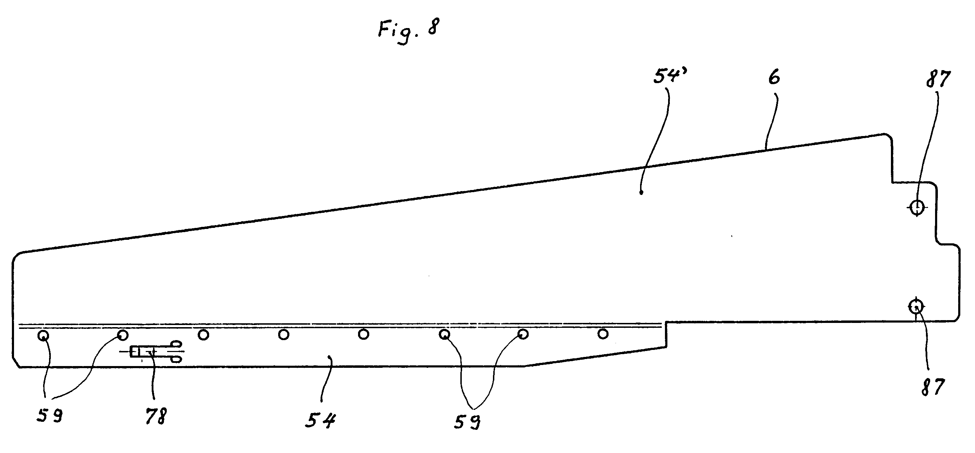

Der Aufbau des Schwertes und der Sägeblätter sowie deren Zusammenwirken ist am deutlichsten in den Figuren 8 bis 12 zu erkennen.

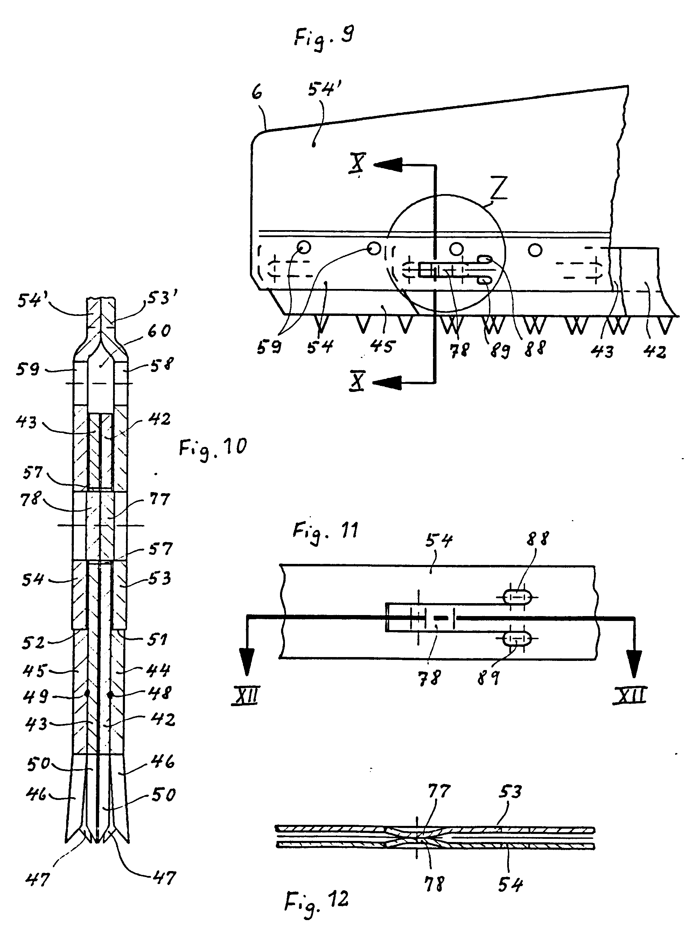

Wie dargestellt, ist das Schwert 6, das an seinem die Befestigungsbohren 87 aufweisenden Ende höher ist als am gegenüberliegenden Ende, aus zwei Platten 53', 54' zusammengesetzt (Figur 10), die beispielsweise durch Punktschweißung miteinander verbunden sind. Dadurch ergibt sich eine hohe Stabilität gegen Verbiegen und Verwinden. Die Platten 53', 54' können beispielsweise aus Stahl oder Aluminium bestehen und bewirken eine gute Wärmeableitung. Im unteren Bereich sind die Platten 53', 54' Trägerabschnitte 53, 54 bildend nach außen versetzt, so daß zwischen ihnen ein Zwischenraum gebildet wird, in den die oberen Bereiche der beiden Sägeblätter eingesetzt und gehalten werden können.

Wie insbesondere Figur 10 zu entnehmen ist, sind die Sägeblätter jeweils aus einem Hauptabschnitt 42, 43 und einem Abschnitt 44, 45 geringerer Höhe zusammengesetzt, die, wie bei 48 bzw. 49 angedeutet, durch Punktschweißung verbunden sind. Die obere Kante des Abschnittes 44 bzw. 45 der Einheit aus Abschnitt 44 bzw. 45 und Hauptabschnitt 42 bzw. 43 bildet eine Längsschulter 51 bzw. 52, die sich im Betrieb an der unteren Kante des Trägerabschnittes 53 bzw. 54 abstützt (Figur 10), während, wie auch Figur 10 zu entnehmen ist, die oberen Kanten der Hauptabschnitte 42, 43 unterhalb des oberen Endes der Trägerabschnitte 53, 54 enden, so daß oberhalb der Hauptabschnitte 42, 43 ein Freiraum 60 gebildet ist, die Hauptabschnitte 42, 43 also nicht an ihren oberen Kanten abgestützt werden.

An den unteren Enden der Abschnitte 44, 45 sind Sägezähne 46, 47 ausgebildet, von denen die Sägezähne 46 nach außen geschränkt sind, so daß sie über die Außenfläche des zugehörigen Abschnittes 44, 45 vorstehen und dadurch einen Einschnitt im Werkstück erzeugen, der breiter ist als die maximale Materialdicke der beiden Sägeblätter. Die an den Abschnitten 44 und 45 vorhandenen Sägezähne 47 sind nach innen geschränkt sind, so daß sie sich bis in den Bereich unterhalb des zugehörigen Hauptabschnittes 42, 43 erstrecken. An diesen Hauptabschnitten 42, 43 befinden sich ungeschränkte Sägezähne 50, die jedoch von ihren Außenkanten schräg nach außen angeschliffen sind.

Die Sägeblätter haben parallel zu den Längsschultern 51, 52 verlaufende Längsschlitze 57 (Figur 5), deren Endbereiche gestrichelt in Figur 9 angedeutet sind. In diese Längsschlitze erstrecken sich Blattfederstreifen 77, 78, die in noch zu beschreibender Weise am Schwert 6 ausgebildet sind. Durch diese Blattfederstreifen 77, 78 werden die Sägeblätter im vorderen Bereich der Trägerabschnitte 53, 54 zwischen diesen in Längsrichtung hin-und herbewegbar geführt, und die Blattfederstreifen 77, 78 verhindern das Lösen der Sägeblätter aus dem Schwert 6, wobei die Sägeblätter mit ihren hinteren Enden in der vorstehend beschriebenen Weise an den Schneidblatthalterungen 15, 18 befestigt sind.

Im Betrieb kommen die Sägezähne 46, 47, 50 der Sägeblätter in Eingriff mit einem Werkstück, wobei die Verlagerung der Sägeblätter in das Schwert 6 hinein durch die Längsschultern 51, 52 verhindert wird, indem die Trägerabschnitte 53, 54 auf diese Längsschulter eine abstützende Kraft ausüben. Diese nach unten auf die Längsschultern 51, 52 ausgeübten Kräfte bewirken, insbesondere wenn, wie dargestellt, der Abschnitt 44, 45 und der Hauptabschnitt 42, 43 gleiche Dicke haben oder gar die Abschnitte 44, 45 geringere Dicke als die Hauptabschnitte 42, 43 aufweisen, auch ein Drehmoment, das die Sägeblätter in ihrem unteren, die Sägezähne tragenden Bereich zusammendrückt, so daß die ungeschränkten Sägezähne 50 gegeneinander gedrückt werden. Gleichzeitig wirkt auf die nach außen geschränkten Sägezähne 46 infolge des Eingriffs mit dem Werkstück eine nach oben und auch nach außen gerichtete Kraft, zumal die Sägezähne 46 auch noch von oben nach unten schräg nach außen angeschliffen sind. Diese Kraft wirkt in Richtung des Auseinanderdrückens der Sägeblätter im Bereich der Sägezähne 50. Die Sägezähne 47 sind jedoch nach innen geschränkt und haben schräg von oben nach unten und innen verlaufende, angeschliffene Kanten, so daß an ihnen eine nach oben und innen wirkende Kraft auftritt, die der Trennkraft für die Sägeblätter durch die Sägezähne 46 entgegenwirkt. Eine entsprechende Kraft greift auch an den Sägezähnen 50 an, die infolge ihres Anschliffes von innen schräg nach außen nach oben und innen wirkt.

Insgesamt können die Sägezähne 46, 47, 50 in ihrer Form und Ausrichtung so abgestimmt werden, daß auf die beiden Sägeblätter im Bereich der Sägezähne 50 durch die an den Sägezähnen 46, 47, 50 angreifenden Kräfte und durch die auf die Längsschultern 51, 52 wirkenden Abstützkräfte ein Drehmoment erzeugt wird, das die Sägeblätter in diesem Bereich zusammendrückt, so daß die Sägezähne 50 und der an sie anschließende Bereich der Hauptabschnitte 42 und 43 im Betrieb auch ohne Einhaltung enger Toleranzen fest zusammengedrückt wird und daher nicht die Gefahr besteht, daß die Sägeblätter durch zwischen sie eindringendes Material aufgespreizt werden.

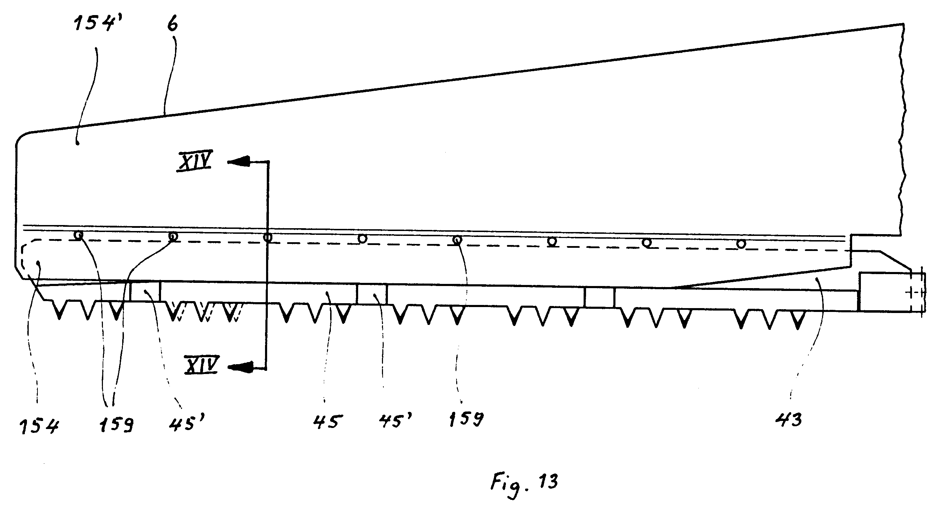

Wie bereits erwähnt, werden die Sägeblätter mittels der Blattfederstreifen 77, 78 zwischen den Trägerabschnitten 53, 54 des Schwertes 6 gehalten. Diese Blattfederstreifen sind durch Stanzen an einandergegenüberliegenden Stellen aus den Wänden der Trägerabschnitte 53, 54 herausgeschnitten, so daß sie nur mit ihrem in den Figuren 9, 11 und 12 rechten Ende noch fest mit der Wand des jeweiligen Trägerabschnittes 53, 54 verbunden sind. Benachbart zu dieser Verbindung sind zur Verringerung der Kerbwirkung Öffnungen 98 und 89 in den Trägerabschnitten 53, 54 vorhanden. Beim Stanzen werden die Blattfederstreifen 77, 78 so verformt, daß sie sich mit ihren Mittelbereichen nach innen wölben, wie dies in Figur 12 zu erkennen ist, so daß sie sich gegenseitig abstützen. Sie können daher durch das Einführen der Hauptabschnitte 42, 43 der Sägeblätter zwischen die Trägerabschnitte 53, 54 auseinandergedrückt werden, und die Sägeblätter können so positioniert werden, daß ihre Schlitze 57 sich im Bereich der Blattfederstreifen 77, 78 befinden, so daß diese in die Schlitze 57 einschnappen und so die Sägeblätter gegen Verlagerungen in senkrechter Richtung (Figur 10) halten.

Da die Blattfederstreifen 77, 78 durch Einschneiden, also ohne Materialentfernung hergestellt werden, stützen sich ihre oberen und unteren Kanten im Betrieb an den entstandenen Begrenzungskanten in den Wänden der Trägerabschnitte 53, 54 ab, so daß die Blattfederstreifen 77, 78 sich im Betrieb nicht in senkrechter Richtung (Figur 10) verlagern können, also eine hohe Stabilität für die Halterung der Sägeblätter gegeben ist.

Zum Entfernen der Sägeblätter braucht der Benutzer diese von den Schneidblatthalterungen 15, 18 zu lösen und dann die Sägeblätter so zu verschieben, daß die Blattfederstreifen 77, 78 sich elastisch nach außen verlagernd aus den Schlitzen 57 in den Hauptabschnitten 42, 43 der Sägeblätter herausgedrückt werden. Die Sägeblätter können dann zwischen den Trägerabschnitten 43, 54 herausbewegt werden.

Wie in den Figuren 8 bis 10 zu erkennen ist, sind in den Trägerabschnitten 53, 54 oberhalb der oberen Kanten der Hauptabschnitte 42, 43 der Sägeblätter Durchgangsbohrungen 58, 59 vorhanden, die den Freiraum 60 (Figur 10) mit der Außenseite der Trägerabschnitte 53, 54 verbinden. Diese Bohrungen ermöglichen den Austritt von zerspantem Material, das im Betrieb zwischen die Trägerabschnitte 53, 54 gelangen kann und bei einer Ansammlung im Freiraum 60 zu Schwierigkeiten im Betrieb führen könnte.

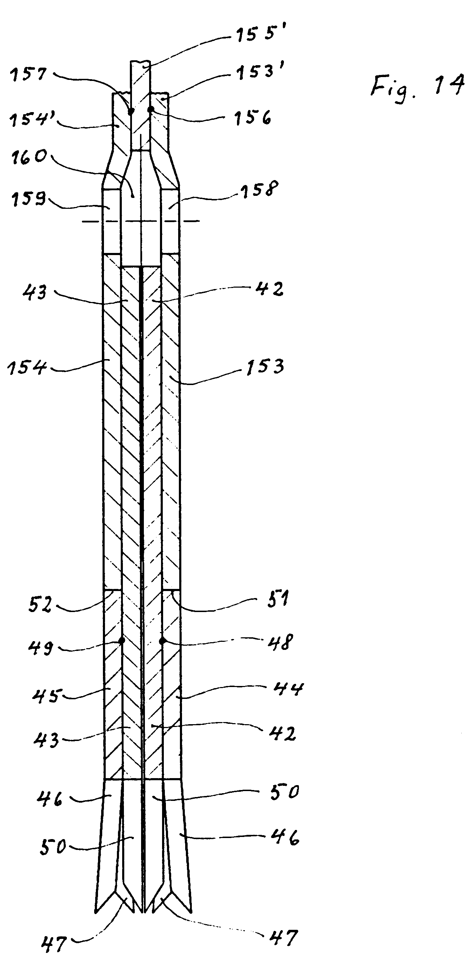

In den Figuren 13 und 14 ist ein gegenüber den Figuren 8 bis 12 etwas abgewandeltes Schwert dargestellt, in das auch etwas abgewandelte Sägeblätter eingesetzt sind. Gleiche Teile wie in den Figurn 8 bis 12 sind in den Figuren 13 und 14 mit gleichen Bezugszeichen und entsprechende Teile im allgemeinen mit um 100 erhöhten Bezugszeichen bezeichnet.

Es sei erwähnt, daß in Figur 13 die Blattfederzunge für die Halterung des benachbarten Sägeblattes nicht gezeigt wurde. In diesem Zusammenhang ist zu bemerken, daß selbstverständlich auch eine andere Art der Befestigung des Sägeblattes im vorderen Bereich des Schwertes gewählt werden könnte. Dort könnte beispielsweise ein sich durch die Trägerabschnitte 153, 154 und den zwischen ihnen befindlichen Aufnahmeraum erstrekkender Niet vorhanden sein, und die Sägeblätter könnten in ihren Hauptabschnitten 42, 43 einen nach vorn offenen Schlitz aufweisen, so daß ein Einführen der Sägeblätter in den Niet möglich wäre.

Das Schwert gemäß Figuren 13 und 14 ist aus drei Teilplatten 153', 155' und 154' aufgebaut, die, wie bei 156 und 157 angedeutet, durch Punktschweißung verbunden sind. Die mittlere Platte 155' erstreckt sich nicht bis zum unteren Ende des Schwertes, sondern endet dort, wo die beiden äußeren Platten 153' und 154' die Trägerabschnitte 153, 154 bildend nach außen versetzt sind, so daß zwischen sie die Hauptabschnitte 42, 43 der Sägeblätter eingesetzt werden können.

Der Freiraum 160 oberhalb der Hauptabschnitte 42, 43 ist wiederum durch Querbohrungen 158, 159 mit der Außenseite der Trägerabschnitte 153, 154 verbunden, so daß durch diese Bohrungen zerspantes Material aus dem Freiraum 160 austreten kann.

Um dieses zerspante Material möglichst gut von den Sägezähnen abführen zu können, können in den Abschnitten 44 und 45 sich von den Sägezähnen bis zu den Längsschultern 51, 52 erstrekkende Nuten 45' (Figur 13) vorhanden sein, durch die das zerspante Material nach oben abgeführt werden kann. Diese Nuten können beispielsweise dadurch ausgebildet werden, daß die Abschnitte 44, 45 in Form von Teilabschnitten mit den Hauptabschnitten 42, 43 verbunden sind, so daß zwischen den Teilabschnitten die Nuten 45' gebildet werden.

## Patentansprüche

1. Kraftgetriebene Säge, insbesondere elektromotorisch angetriebene Säge, mit zwei nebeneinander, parallel zueinander angeordneten, gegensinnig hin und her bewegbaren Sägeblättern (7), deren benachbarte, hintere Enden mit Schneidblatthalterungen (15, 18) verbunden sind, und mit einem im den Sägezähnen (46, 47, 50) abgewandten Bereich der Sägeblätter (7) diese in einem Aufnahmeschlitz aufnehmenden Schwert (6), wobei im Betrieb bei Eingriff der Sägezähne (46, 47, 50) der Sägeblätter (7) mit einem Werkstück im Bereich ihrer Sägezähne (46, 47, 50) zusammendrükkende Kräfte bzw. Drehmomente erzeugt werden, **dadurch gekennzeichnet,** daß die Sägeblätter (7) an ihren Außenseiten in Richtung der Längserstreckung verlaufende, von den Sägezähnen (46, 47, 50) weg gerichtete Längsschultern (51; 52) aufweisen, daß der Aufnahmeschlitz des Schwertes (6) für die Sägeblätter (7) seitlich durch Trägerabschnitte (53, 54) begrenzt ist, an deren unteren Kanten sich die Sägeblätter (7) durch Eingriff mit ihren Längsschultern (51, 52) abstützen, während zwischen den oberen Kanten der Sägeblätter (7) und dem Grund des Aufnahmeschlitzes ein Freiraum (60) vorhanden ist, und daß die Kräfte bzw. Drehmomente zumindest teilweise durch das Zusammenwirken von Längsschultern (51, 52) der Sägeblätter (7) und unteren Kanten der Trägerabschnitte (53, 54) des Schwertes (6) entstehen.

2. Säge nach Anspruch 1, **dadurch gekennzeichnet,** daß das Biegewiderstandsmoment des Schwertes (6) das 7,5-fache bis 30-fache des Biegewiderstandsmomentes eines Sägeblattes (7) beträgt.

3. Säge nach Anspruch 2, **dadurch gekennzeichnet,** daß das Biegewiderstandsmoment das 10-fache bis 25-fache des Biegewiderstandmomentes eines Sägeblattes (7) beträgt.

4. Säge nach Anspruch 2 oder 3, **dadurch gekennzeichnet,** daß die Sägeblätter (7) jeweils eine maximale Dicke von 1 mm bis 2 mm haben.

5. Säge nach einem der Ansprüche 1 bis 4, **dadurch gekennzeichnet,** daß die Höhe des Schwertes (6) im Bereich seines Befestigungsendes größer ist als im Bereich seines freien Endes.

6. Säge nach einem der Ansprüche 1 bis 5, **dadurch gekennzeichnet,** daß das Schwert (6) aus mindestens zwei flächig miteinander verbundenen Teilplatten (53', 54'; 153', 154', 155') besteht.

7. Säge nach Anspruch 6, **dadurch gekennzeichnet,** daß das Schwert aus zwei Teilplatten (53', 54') besteht, die im den Sägeblättern (7) zugewandten Bereich die Trägerabschnitte (53, 54) bildend im Abstand voneinander liegen.

8. Säge nach Anspruch 6, **dadurch gekennzeichnet,** daß das Schwert aus drei Teilplatten (153', 154', 155') besteht, von denen die mittlere im Abstand von den unteren Kanten der Trägerabschnitte (153, 154) endet, und daß die beiden äußeren Teilplatten (153', 154') im den Sägeblättern (7) zugewandten Bereich die Trägerabschnitte (153, 154) bildend nach außen versetzt sind.

9. Säge nach einem der Ansprüche 6 bis 8, **dadurch gekennzeichnet,** daß die Teilplatten (53', 54'; 153', 154', 155') durch Punktschweißung (156, 157) miteinander verbunden sind.

10. Säge nach einem der Ansprüche 1 bis 9, **dadurch gekennzeichnet,** daß jedes der Sägeblätter (7) mindestens drei Gruppen von Sägezähnen (46, 47, 50) aufweist, von denen die erste Gruppe außen liegende, nach außen geschränkte und über die äußere ebene Fläche des Sägeblattes (7) vorstehende Sägezähne (46), die zweite Gruppe innen liegende, ungeschränkte Sägezähne (50), die von ihren Außenkanten bezüglich des Sägeblattes (7) nach außen angeschliffen sind, und die dritte Gruppe Sägezähne (47) umfaßt, deren Zahnwurzeln weiter außen liegen als die Sägezähne (50) der zweiten Gruppe und die nicht über die Sägezähne (50) der zweiten Gruppe vorstehend nach innen geschränkt sind.

11. Säge nach Anspruch 10, **dadurch gekennzeichnet,** daß die Zahnwurzeln der Sägezähne (46, 47) der ersten und dritten Gruppe in einem Bereich (44; 45) des Sägeblattes (7) liegen, der sich weiter außen als die Längsebene durch das Sägeblatt (7) am inneren Ende der Längsschulter (51, 52) befindet.

12. Säge nach einem der Ansprüche 1 bis 11, **dadurch gekennzeichnet,** daß die Breite der Längsschulter (51, 52) nicht größer als die halbe maximale Dicke des Sägeblattes (7) ist.

13. Säge nach einem der Ansprüche 1 bis 12, **dadurch gekennzeichnet,** daß die Längsschulter (51; 52) jedes Sägeblattes (7) von einem Sägezähne (46, 47) tragenden Abschnitt (44; 45) gebildet ist, der flächig mit dem über die Längsschulter (51; 52) vorstehenden und Sägezähne (50) aufweisenden Hauptabschnitt (42; 43) verbunden ist.

14. Säge nach Anspruch 13, **dadurch gekennzeichnet,** daß Abschnitt (44; 45) und Hauptabschnitt (42; 43) miteinander verschweißt sind.

15. Säge nach Anspruch 13 oder 14, **dadurch gekennzeichnet,** daß der Abschnitt (44; 45) sich von den Sägezähnen (46, 47) zur Längsschulter (51; 52) erstreckende, an beiden Enden offene Nuten (45') aufweist bzw. durch solche Nuten (45') unterbrochen ist.

16. Säge nach einem der Ansprüche 1 bis 15, **dadurch gekennzeichnet,** daß auf Höhe des Freiraums (60; 160) zwischen den Sägeblättern (7) und dem Schwert (6) in diesem den Freiraum (60; 160) mit der Schwertaußenfläche verbindende Bohrungen (58, 59; 158, 159) vorgesehen sind.

17. Säge nach einem der Ansprüche 1 bis 16, **dadurch gekennzeichnet,** daß oberhalb der Längsschultern (51, 52) in den Sägeblättern (7) parallel zu den Längsschultern (51, 52) verlaufende Führungsschlitze (57) vorgesehen sind und daß in den benachbarten Wandbereichen der Trägerabschnitte (53, 54) sich in die Führungsschlitze (57) erstreckende, elastisch verschwenkbare Blattfederstreifen (77, 78) ausgebildet sind.

18. Säge nach einem der Ansprüche 1 bis 17, mit einem Kunststoffgehäuse (1), in dem ein aus Metall bestehendes, die Schneidblatthalterungen (15, 18) aufnehmendes Getriebegehäuse (9, 9') angeordnet ist, **dadurch gekennzeichnet,** daß das Schwert (6) am Getriebegehäuse (9, 9') befestigt ist.

19. Säge nach Anspruch 18, **dadurch gekennzeichnet,** daß am Getriebegehäuse (9, 9') ein Befestigungsansatz (5) mit einer Anlagefläche für den Befestigungsbereich des Schwertes (6) angeformt ist.

**Claims**

1. Power-driven saw, in particular electric motor-driven saw having two saw blades (7) which are arranged next to one another and parallel to one another and reciprocate in opposite directions, of which the adjacent rear ends are connected to cutting blade holders (15, 18), and having a support plate (6) receiving the saw blades (7) in a receiving slot in the region of the saw blades (7) remote from the saw teeth (46, 47, 50), pressing forces or turning moments being produced during operation upon engagement of the saw teeth (46, 47, 50) of the saw blades (7) with a workpiece in the region of their saw teeth (46, 47, 50), characterised in that the saw blades (7) have, at their outer faces, longitudinal shoulders (51; 52) which extend in a longitudinal direction and are directed away from the saw teeth (46, 47, 50), in that the receiving slot of the support plate (6) for the saw blades (7) is limited at the sides by carrier portions (53, 54) on whose lower edges the saw blades (7) rest by engagement with their longitudinal shoulders (51, 52) while a free space (60) exists between the upper edges of the saw blades (7) and the bottom of the receiving slot, and in that the forces or turning moments are formed at least in part by the co-operation between longitudinal shoulders (51, 52) of the saw blades (7) and lower edges of the carrier portions (53, 54) of the support plate (6).

2. Saw according to claim 1, characterised in that the moment of resistance to bending of the support plate (6) is 7.5 to 30 times the moment of resistance to bending of one saw blade (7).

3. Saw according to claim 2, characterised in that the moment of resistance to bending is 10 to 25 times the moment of resistance to bending of one saw blade (7).

4. Saw according to claim 2 or 3, characterised in that the saw blades (7) each have a maximum thickness of 1 mm to 2mm.

5. Saw according to one of claims 1 to 4, characterised in that the height of the support plate (6) is greater in the region of its mounting end than in the region of its free end.

6. Saw according to one of claims 1 to 5, characterised in that the support plate (6) consists of at least two partial plates (53', 54'; 153', 154', 155') connected to each other by their faces.

7. Saw according to claim 6, characterised in that the support plate consists of two partial plates (53', 54') which, in the region facing the saw blades (7), are spaced from each other to form the carrier portions (53, 54).

8. Saw according to claim 6, characterised in that the support plate consists of three partial plates (153', 154', 155') of which the middle plate ends at a distance from the lower edges of the carrier portions (153, 154) and in that the two outer partial plates (153', 154'), in the region facing the saw blades (7), are offset outwardly to form the carrier portions (153, 154).

9. Saw according to one of claims 6 to 8, characterised in that the partial plates (53', 54'; 153', 154', 155') are connected to each other by spot welding (156, 157).

10. Saw according to one of claims 1 to 9, characterised in that each of the saw blades (7) has at least three groups of saw teeth (46, 47, 50) of which the first group comprises externally located saw teeth (46) which are set outwardly and project beyond the outer plane face of the saw blade (7), the second group comprises internally located unset saw teeth (50) which are externally ground from their outer edges with respect to the saw blade (7), and the third group comprises saw teeth (47) of which the roots are located farther out than the saw teeth (50) of the second group and are set inwardly, not projecting beyond the saw teeth (50) of the second group.

11. Saw according to claim 10, characterised in that the roots of the saw teeth (46, 47) of the first and third group are located in a region (44; 45) of the saw blade (7) which is located farther out than the longitudinal plane through the saw blade (7) at the inner end of the longitudinal shoulder (51, 52).

12. Saw according to one of claims 1 to 11, characterised in that the width of the longitudinal shoulder (51, 52) is not greater than half the maximum thickness of the saw blade (7).

13. Saw according to one of claims 1 to 12, characterised in that the longitudinal shoulder (51; 52) of each saw blade (7) is formed by a portion (44; 45) carrying saw teeth (46, 47), which portion (44; 45) is connected by its face to the main portion (42; 43) which projects beyond the longitudinal shoulder (51; 52) and has saw teeth (50).

14. Saw according to claim 13, characterised in that portion (44; 45) and main portion (42; 43) are welded to one another.

15. Saw according to claim 13 or 14, characterised in that the portion (44; 45) has grooves (45') which extend from the saw teeth (46, 47) to the longitudinal shoulder (51; 52) and are open at both ends or is interrupted by such grooves (45').

16. Saw according to one of claims 1 to 15, characterised in that at the level of the free space (60; 160) between the saw blades (7) and the support plate (6), bores (58, 59; 158, 159) connecting the free space (60; 160) to the outer face of the support plate are provided in the support plate.

17. Saw according to one of claims 1 to 16, characterised in that above the longitudinal shoulders (51, 52) guide slots (57) extending parallel to the longitudinal shoulders (51, 52) are provided in the saw blades (7) and in that elastically pivotal leaf spring strips (77, 78) extending into the guide slots (57) are provided in the adjacent wall regions of the carrier portions (53, 54).

18. Saw according to one of claims 1 to 17, with a plastics housing (1) in which there is arranged a gear housing (9, 9') which consists of metal and receives the cutting blade holders (15, 18), characterised in that the support plate (6) is fastened on the gear housing (9, 9').

19. Saw according to claim 18, characterised in that a mounting projection (5) with a contact face for the mounting region of the support plate (6) is shaped on the gear housing (9, 9').

**Revendications**

1. Scie motorisée, en particulier scie entraînée par un moteur électrique, comportant deux lames de scie (7) disposées mutuellement parallèlement et l'une à côté de l'autre, pouvant être déplacées alternativement en sens inverses, dont les extrémités arrière adjacentes sont reliées à des supports de lames (15, 18), et comportant une armature (6) qui, dans la zone des lames de scie (7) qui est éloignée des dents de scie (46, 47, 50), reçoit ces lames dans une fente de réception, scie dans laquelle, en service, lorsque les dents de scie (46, 47, 50) des lames de scie (7) attaquent une pièce, il se développe dans la zone de leurs dents de scie (46, 47, 50) des forces ou couples qui les resserrent, la scie étant caractérisée en ce que les lames de scie (7) présentent, sur leurs côtés extérieurs, des épaulements longitudinaux (51; 52) s'étendant dans la direction longitudinale, qui sont dirigés dans le sens qui s'éloigne des dents de scie (46, 47, 50), en ce que la fente de réception de l'armature (6) qui reçoit les lames de scie (7) est limitée latéralement par des parties porteuses (53, 54) contre les bords inférieurs desquelles les lames de scie (7) prennent appui en venant en prise par leurs épaulements longitudinaux (51, 52), tandis qu'il est prévu un espace libre (60) entre les bords supérieurs des lames de scie (7) et le fond de la fente de réception, et en ce que les forces ou couples sont engendrés, au moins partiellement, par la coopération entre les épaulements longitudinaux (51, 52) des lames de scie (7) et les bords inférieurs des parties porteuses (53, 54) de l'armature (6).

2. Scie selon la revendication 1, caractérisée en ce que le moment résistant à la flexion de l'armature (6) est compris entre 10 fois et 25 fois le moment résistant à la flexion d'une lame de scie (7).

3. Scie selon la revendication 1 ou 2 caractérisée en ce que le moment résistant à la flexion est compris entre 10 fois et 25 fois le moment résistant d'une lame de scie (7).

4. Scie selon la revendication 2 ou 3, caractérisée en ce que les lames de scie (7) ont chacune une épaisseur maximale de 1 à 2 mm.

5. Scie selon une des revendications 1 à 4, caractérisée en ce que la hauteur de l'armature (6) dans la zone de son extrémité de fixation est plus grande que dans la zone de son extrémité libre.

6. Scie selon une des revendications 1 à 5, caractérisée en ce que l'armature (6) se compose d'au moins deux plaques élémentaires (53', 54'; 154', 154', 155') reliées l'une avec l'autre à leurs surfaces.

7. Scie selon la revendication 6, caractérisée en ce que l'armature se compose de deux plaques élémentaires (53', 54'), qui sont situées, dans la zone dirigée vers les lames de scie (7), à distance l'une de l'autre en formant les parties porteuses (53, 54).

8. Scie selon la revendication 6, caractérisée en ce que l'armature se compose de trois plaques élémentaires (153', 154', 155'), dont la plaque centrale se termine à distance des bords inférieurs des parties porteuses (153, 154), et en ce que les deux plaques élémentaires extérieures (153', 154') sont décalées vers l'extérieur, dans la zone dirigée vers les lames de scie (7), en formant les parties porteuses (153, 154).

9. Scie selon une des revendications 6 à 8, caractérisée en ce que les plaques élémentaires (53'; 54'; 153', 154', 155') sont reliées entre elles par soudage par points (156, 157).

10. Scie selon une des revendications 1 à 9 caractérisée en ce que chacune des lames de scie (7) comporte au moins trois groupes de dents de scie (46, 47, 50), dont le Premier groupe comporte des dents de scie (46), situées à l'extérieur, décalées vers l'extérieur et faisant saillie au-delà de surface extérieure plane de la lame (7), le second groupe comporte des dents de scie (50) situées à l'intérieur, non décalées et qui sont affûtées vers l'extérieur à partir de leurs bords extérieurs par rapport à la lame de scie (7), et le troisième groupe comporte des dents de scie (47) dont les racines sont situées plus loin vers l'extérieur que les dents de scie (50) du second groupe et qui ne sont pas décalées par rapport aux dents de scie (50) du second groupe en faisant saillie vers l'intérieur.

11. Scie selon la revendication 10, caractérisée en ce que les racines des dents de scie (46, 47) du premier et du troisième groupe sont disposées dans une zone (44; 45) de la lame de scie (7) qui est située plus loin vers l'extérieur que le plan longitudinal traversant la lame de scie (7) à l'extrémité intérieure des épaulements longitudinaux (51, 52).

12. Scie selon une des revendications 1 à 11, caractérisée en ce que la largeur des épaulements longitudinaux (51, 52) n'est pas supérieure à la moitié de l'épaisseur maximale de la lame de scie (7).

13. Scie selon une des revendications 1 à 12, caractérisée en ce que l'épaulement longitudinal (51; 52) de chaque lame de scie (7) est formé par une partie (44; 45) portant des dents de scie (46, 47), qui est reliée, à sa surface, à la partie principale (42; 43) qui fait saillie au-delà de l'épaulement longitudinal (51; 52) et qui présente des dents de scie (50).

14. Scie selon la revendication 13, caractérisée en ce que la partie (44; 45) et la partie principale (42; 43) sont soudées l'une à l'autre.

15. Scie selon la revendication 13 ou 14, caractérisée en ce que la partie (44; 45) comporte des rainures (45') ouvertes aux deux extrémités et s'étendant des dents de scie (46, 47) vers l'épaulement longitudinal (51; 52), ou bien est interrompue par de telles rainures (45').

16. Scie selon une des revendications 1 à 15, caractérisée en ce qu'il est prévu à la hauteur de l'espace libre (60; 160) entre les lames de scie (7) et l'armature (6), dans cette dernière, des trous (58, 59; 158, 159) reliant l'espace libre (60; 160) avec la surface extérieure de l'armature.

17. Scie selon une des revendications 1 à 16, caractérisée en ce qu'il est prévu au-dessus des épaulements longitudinaux (51, 52), dans les lames de scie (7), des fentes de guidage (57) orientées parallèlement aux épaulements longitudinaux (51, 52) et en ce que, dans les zones de paroi adjacentes des parties porteuses (53, 54) sont formées des languettes élastiques (77, 78) s'étendant dans les fentes de guidage (57) et pouvant pivoter élastiquement.

18. Scie selon une des revendications 1 à 17, comportant un carter en matière plastique (1), dans lequel est disposé un boîtier de transmission (9, 9') constitué de métal et recevant les supports de lames de scie (15, 18), scie caractérisée en ce que l'armature (6) est fixée sur le boîtier de transmission (9, 9').

19. Scie selon la revendication 18, caractérisée en ce que sur le boîtier de transmission (9, 9') est formé un appendice de fixation (5) comportant une surface d'appui pour la zone de fixation de l'armature (6).

Fig. 3

Fig. 1

Fig. 4

EP 0 267 973 B1

Fig. 5

Fig. 6

EP 0 267 973 B1

Fig. 7

Fig. 8

Fig. 9

6    54'

X

Z

59   54   45    78  89  88    43   42

X

54'   53'
60
59    58

43    42
57
78    77
57
54    53

52    51
45    44
49    48
43    42
50    46
46    50

47    47

Fig. 10

Fig. 11

54    88

XII    78  89    XII

77    53

78    54

Fig. 12

Fig. 13

EP 0 267 973 B1

Fig. 14